# EUROPEAN PATENT APPLICATION

(11) **EP 3 061 343 A1**
(43) Date of publication of application: **31.08.2016**
(21) Application number: 14873148.2
(22) Date of filing: 28.01.2014
(51) Int. Cl.: A01K 23/00, A01K 1/015

(54) **COVER MEMBER OF ABSORBENT MEMBER AND PET TOILET USING SAME**

(30) Priority: 27.12.2013 JP 2013273530
(71) Applicant: Unicharm Corporation, Ehime 799-0111 (JP)
(72) Inventor: HASEGAWA, Satoshi, Kanonji-shi Kagawa 769-1602 (JP); MATSUO, Takayuki, Kanonji-shi Kagawa 769-1602 (JP)
(74) Representative: Dolleymores
(86) International application number: PCT/JP2014/051793
(87) International publication number: WO 2015/098135

(57) **Abstract**

Provided is a cover member by which dislocation of an absorbent member can be prevented and the amount of urine remaining on the surface can be reduced. A cover member (1) of a sheet-shaped absorbent member (5) capable of absorbing pet excrement, said cover member (1) being disposed in the outer peripheral side of the absorbent member (5) and covering a part of the absorbent member (5). The cover member (1) has a definite width (W) in a direction intersecting with the direction along the outer periphery of the absorbent member (5) and is provided with an inclined section (11), said inclined section being formed on the upper surface and inclined inward from the outside in the width direction. The width (W) of the cover member (1) is 30-250 mm, the maximum height thereof is not more than 100 mm and the length in the width direction is longer than the length in the height direction.

## Description

### TECHNICAL FIELD

The present invention relates to a cover member for an absorbent member, and more specifically, to a cover member to be placed on an outer peripheral side of a sheet-shaped absorbent member for absorbing pet discharge.

### BACKGROUND ART

Conventionally, a liquid-absorbable sheet-shaped absorbent member referred to as a pet sheet is placed on, for example, a floor for use as a pet toilet to take care of discharge of a pet kept indoors. Such an absorbent member is usable only at a place set as a pet toilet inside a room. In some cases, the sheet-shaped absorbent member is shifted or curled up when a pet steps on the absorbent member. Hence, it is known to place a frame member on an outer peripheral side of the absorbent member in order to prevent shifting (for example, see Patent Document 1).

### Prior Art Document

### Patent Document

Patent Document 1: Japanese Utility Model Registration No. 3154900

### SUMMARY OF THE INVENTION

Problems to be Solved by the Invention

The frame member described in Patent Document 1 however has a flat shape. When, for example, urine drops on the frame member, the urine stays on the frame, which could cause odor or, depending on the movement of the pet, the urine spilling on the floor. For this reason, a cover member is desired which prevents shifting of the absorbent member as well as remaining of urine on the frame member.

An object of the present invention is to provide a cover member for preventing shifting of an absorbent member as well as remaining of urine on a surface.

### Means for Solving the Problem

(1) A cover member for an absorbent member according to the present invention is placeable at an outer peripheral side of the absorbent member to partly cover the absorbent member. The absorbent member is a pet discharge absorbable sheet-shaped member. The cover member has a predetermined width in a direction crossing a direction along an outer peripheral edge of the absorbent member. The cover member also has an upper surface provided with a slanted portion having a downward inclination extending widthwise from an outer side toward an inner side.
(2) The cover member preferably has the width in a range from 30 mm to 250 mm and a maximum height of 100 mm or less, and the width is preferably greater in length than the height.
(3) The cover member preferably comprises a frame member configured to fixedly hold the outer peripheral edge of the absorbent member.
(4) The cover member preferably has a bottom surface having a stepped portion comprising a heightwise depression with the inner peripheral side at a higher position than the outer peripheral side.
(5) The cover member preferably has an upper surface with a plurality of grooves extending widthwise, and the slanted portion is preferably provided at the bottom of each of the grooves.
(6) The cover member is preferably made of a foldable or rollable flexible member.
(7) A pet toilet comprises the cover member and the absorbent member according any of (1) to (6). The absorbent member preferably has a marking indicative of a position for locating the cover member.

### Effects of the Invention

According to the present invention, a cover member is provided which prevents shifting of an absorbent member as well as remaining of urine on a surface.

### BRIEF DESCRIPTION OF THE DRAWINGS

Fig. 1 is a plan view of a pet toilet in accordance with a first embodiment of the present invention.
Fig. 2 is a cross-sectional view taken along line A-A of Fig. 1.
Fig. 3 depicts a state before placing a cover member of the pet toilet according to the first embodiment on an absorbent member.
Fig. 4 is a cross-sectional view of a cover member in accordance with a second embodiment.
Fig. 5 is a plan view of a cover member in accordance with a third embodiment.
Fig. 6 is a cross-sectional view taken along line B-B of Fig. 5.
Fig. 7 is a perspective view of a cover member in accordance with a fourth embodiment.
Fig. 8 is a perspective view of a cover member according to a variation.

### EMBODIMENTS FOR CARRYING OUT THE INVENTION

Preferred embodiments of a cover member 1 and a pet toilet 100 using the cover member 1 according to the present invention are described herein with reference to the drawings.

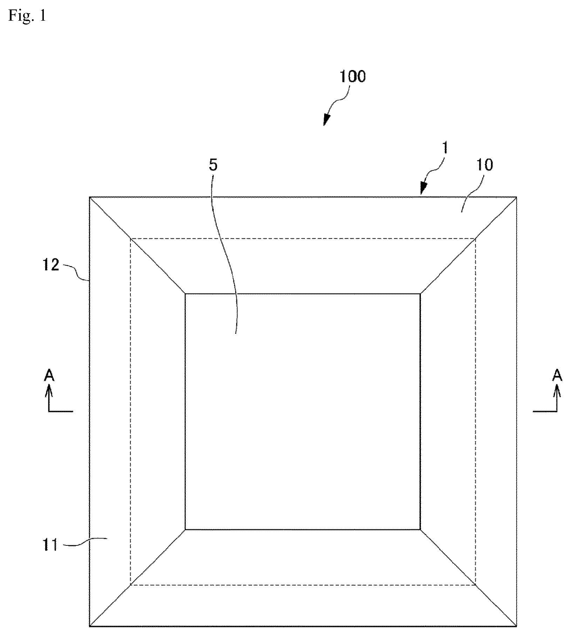

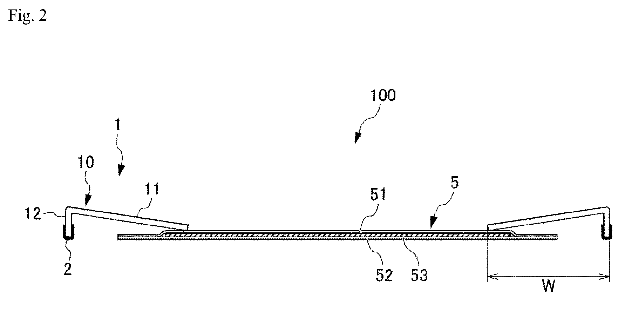

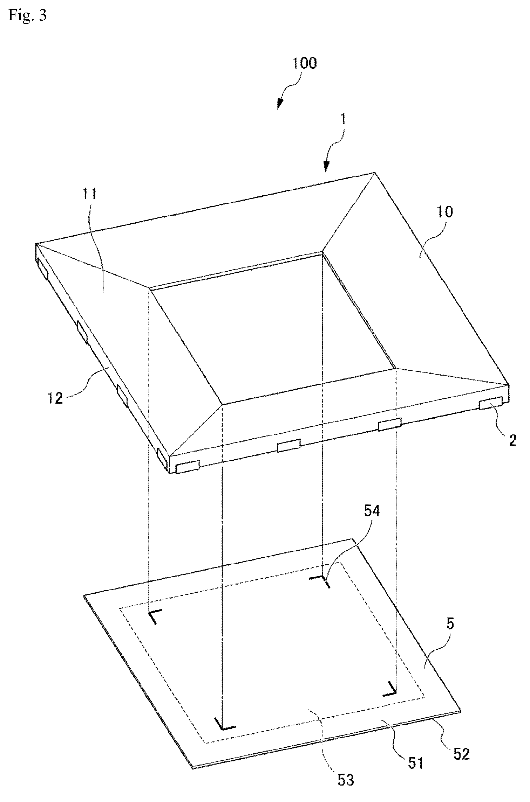

Fig. 1 is a plan view of pet toilet 100. Fig. 2 is a cross-sectional view taken along line A-A of Fig. 1. Fig. 3 depicts a state before placing a cover member of the pet toilet on an absorbent member.

As shown in Figs. 1 to 3, pet toilet 100 includes cover member 1 and an absorbent sheet 5 serving as a sheet-shaped absorbent member. Cover member 1 is placed on absorbent sheet 5 when in use.

As shown in Figs. 1 and 2, cover member 1 includes a frame member 10 and a height adjuster 2. Cover member 1 is placed on an outer peripheral side of absorbent sheet 5.

Frame member 10 has a four-sided shape in plan view and has an opening in a central portion. Frame member 10 has an outer peripheral sidewall 12 and a slanted portion 11.

As shown in Fig. 2, outer peripheral sidewall 12 stands upright heightwise at the outer side of frame member 10.

Slanted portion 11 defines the upper surface of frame member 10. This slanted portion 11 is configured such that the upper surface of frame member 10 inclines downward from the upper end of outer peripheral sidewall 12 along the outer peripheral edge toward the inner peripheral edge. The end of the inner peripheral edge of slanted portion 11 is positioned at the same height as the lower end of outer peripheral sidewall 12. Slanted portion 11 has a width W spanning from the outer peripheral edge to the inner peripheral edge of frame member 10.

Slanted portion 11 preferably has a sufficiently wide width W so that, when a pet uses pet toilet 100, urine will not smear the floor as long as the urine drops on slanted portion 11 even when the urine is spattered out of absorbent sheet 5. As shown in Fig. 2, width W of slanted portion 11 is preferably not less than 30 mm, more preferably, not less than 50 mm, and further preferably, not less than 80 mm for, for example, preventing urine from landing outside slanted portion 11. Moreover, width W of slanted portion 11 is preferably not greater than 250 mm, more preferably, not greater than 200 mm, and further preferably, not greater than 110 mm for the compact size of pet toilet 1 and pets' facility to get into absorbent sheet 5.

The surface of a mold for forming slanted portion 11 is so-called textured by, for example, etching, sandblasting, and grinding, such that slanted portion 11 has a non-glossy surface.

Frame member 10 has a maximum height that is preferably not greater than 100 mm, more preferably, not greater than 50 mm, and further preferably, not greater than 30 mm for setting the height such that a pet will not recognize the frame member as an obstacle. Further, the maximum height is preferably not less than 3 mm, more preferably, not less than 5 mm, and further preferably, not less than 7 mm for causing liquid, e.g., urine, that has landed on frame member 10 to flow into absorbent sheet 5.

In view of the above aspects, frame member 10 is provided as a planar member with a widthwise dimension (width W of slanted portion 11) greater than the heightwise dimension. Specifically, the widthwise dimension is preferably greater than the heightwise dimension by more than 100% and not more than 8000%, and more preferably, by not less than 300% and not more than 1000%.

Frame member 10 is made of a resinous material by injection molding. Frame member 10 is made at least harder than the surface of absorbent sheet 5. Exemplary materials for frame member 10 include polyethylene, polypropylene, vinyl chloride, polystyrene, acrylonitrile butadiene styrene (ABS), styrene acrylonitrile (AS), polyester such as polyethylene terephthalate, polyamide, and polycarbonate. It is to be noted that a material other than resinous materials, such as various kinds of metals including stainless steel, is also usable. In addition, the forming method is not limited to injection molding, and applicable methods are, for example, fusing of cut and processed metals or molding adhesively bonded cut acrylic panels.

Height adjuster 2 is positioned on the lower surface of frame member 10 to cover the lower end of outer peripheral sidewall 12. Height adjuster 2 is made of an elastic body such as rubber. Height adjuster 2 is positioned at the lower end of outer peripheral sidewall 12, so as to align the inner peripheral edge of slanted portion 11, which is to be lifted by the thickness of absorbent sheet 5 when cover member 1 is placed on absorbent sheet 5, and the lower end of outer peripheral sidewall 12 at the same height.

Absorbent sheet 5 is a four-sided sheet in plan view and has a top surface sheet 51, a rear surface sheet 52, and an absorbent core 53.

Top surface sheet 51 is of a material that is permeable to liquid such as urine, for example, non-woven fabric. Top surface sheet 51 is positioned directly under the opening of frame member 10.

Rear surface sheet 52 is of a liquid impermeable material, such as a film.

Absorbent core 53 is arranged between top surface sheet 51 and rear surface sheet 52. Absorbent core 53 is enclosed within the outer peripheral edges of top surface sheet 51 and rear surface sheet 52. Absorbent core 53 contains an absorbent material that absorbs and holds liquid, such as pulp or an absorbent polymer.

It is to be noted that as shown in Fig. 3, absorbent sheet 5 may have markings 54 on top surface sheet 51 at positions corresponding to the four corners of the inner peripheral edge of frame member 10. Markings 54 are printed on top surface sheet 51. Thus, frame member 10 of cover member 1 is positioned on the outer peripheral side of absorbent sheet 5 by aligning the inner peripheral edge of frame member 10 to markings 54 on top surface sheet 51 of absorbent sheet 5, such that frame member 10 is prevented from being placed off absorbent sheet 5.

Next, a method of using pet toilet 100 in accordance with the first embodiment is described.

First, absorbent sheet 5 is put in a place set as a toilet for a pet in a room. Frame member 10 is placed to partly cover absorbent sheet 5. Frame member 10 has a predetermined width W in a direction crossing the direction along the outer peripheral edge of absorbent sheet 5. Thus, as shown in Fig. 2, the inner peripheral edge of frame member 10 presses down the four sides of absorbent sheet 5. In this manner, absorbent sheet 5 is fixedly positioned by cover member 1.

In some cases, pet animals, especially dogs, would not come to a position above absorbent sheet 5 over an enclosure or a fence if a tall enclosure or fence is disposed around absorbent sheet 5. Further, dogs tend to urinate on a thing that they recognize as a wall. For this reason, a tall enclosure or fence could prompt a dog to urinate on the enclosure or fence, causing urine to leak out of absorbent sheet 5. On the other hand, since cover member 1 according to the first embodiment has a maximum height of from 3 mm to 50 mm, absorbent sheet 5 is easily accessible for dogs to come up for discharging, and dogs would be less likely to recognize cover member 1 as a wall.

It is to be noted here that since dogs are a quadrupedal animal, hind legs of a dog could be placed outside absorbent sheet 5 even when the dog's fore legs are on the absorbent sheet, or urine discharged from the dog's discharging part proximate to the hind legs could land outside absorbent sheet 5 despite the hind legs having been placed inside absorbent sheet 5; however, since a wider cover member 1 is placed at the outer side of absorbent sheet 5, urine that failed to land on absorbent sheet 5 is received by the upper surface of slanted portion 11 of cover member 1. Then, the urine dropped on slanted portion 11 moves to the surface of absorbent sheet 5 to be absorbed there because of the downward inclination of slanted portion 11 from the outer peripheral edge to the inner peripheral edge.

Since cover member 1 is made of a material that is harder than the material for absorbent sheet 5 comprising an absorbent member and non-woven fabric, dogs understand that cover member 1 is not absorbent sheet 5. Thus, by training dogs to discharge on softer absorbent sheet 5, the dogs are encouraged to voluntarily advance into absorbent sheet 5 that is located at the inner side of cover member 1, for discharge. Slanted portion 11 of frame member 10 of cover member 1 has a textured, non-glossy upper surface. Thus, dogs tread on slanted portion 11 without hesitation to advance to the location of absorbent sheet 5.

Cover member 1 and pet toilet 100 according to the first embodiment as described above provide the following effects.
(1) Absorbent sheet cover member 1 is placed on the outer peripheral side of pet discharge absorbable absorbent sheet 5 to partly cover absorbent sheet 5. Absorbent sheet 5 has a predetermined width W in a direction crossing a direction along the outer peripheral edge of absorbent sheet 5. Cover member 1 has slanted portion 11 on the upper surface to incline downward from the outer side toward the inner side widthwise. Since cover member 1 has predetermined width W and is placed at the outer side of absorbent sheet 5, pet discharge spattered out of absorbent sheet 5 instead of landing on absorbent sheet 5 is received by cover member 1. Thus, the area around absorbent sheet 5, such as a floor, is less likely smeared with discharge, reducing the frequency of floor cleaning. Further, even when pet urine is dropped outside absorbent sheet 5, the urine moves to absorbent sheet 5 along slanted portion 11 to be absorbed by absorbent sheet 5. Thus, little urine is left on the surface of cover member 1, which prevents odor and keeps the area around the pet toilet clean.
(2) Cover member 1 has a width W in a range from 30 mm to 250 mm and a maximum height not greater than 100 mm, such that the widthwise dimension is greater than the heightwise dimension. Wider width W of cover member 1 provides a wider range for receiving urine spattered out of absorbent sheet 5. Hence, urine is less likely to remain on the surface of cover member 1, and odor is less likely to occur, and the area around the pet toilet is kept clean.
(3) Cover member 1 is provided in the form of frame member 10 with a function of firmly holding the outer peripheral edge of absorbent sheet 5. Thus, the four peripheries of absorbent sheet 5 are fixedly positioned by the inner peripheral edge of frame member 10, providing more stable hold of absorbent sheet 5.
(4) By providing absorbent sheet 5 with markings indicative of positions for locating cover member 1, more reliable positional adjustment is available such that the portion of absorbent sheet 5 in which absorbent core 53 is arranged is positioned inside frame member 10 of cover member 1 when cover member 1 is placed on absorbent sheet 5.
(5) Height adjuster 2 is attached at the lower surface of frame member 10 and is made of an elastic body such as rubber. Even though the inner peripheral side of frame member 10 is lifted by contacting the thicker portion of absorbent sheet 5 in which absorbent core 53 is arranged, height adjuster 2 provides for adjustment such that the outer portion of frame member 10 is lifted likewise. Hence, cover member 1 stands solid and is set stably on the installation surface. Further, since height adjuster 2 is made of an elastic body such as rubber, the cover member is installed stably without slipping on an installation surface having a lower coefficient of friction.

### EXAMPLES

Next, the present invention is described in more detail by way of examples without limiting the present invention to the following examples.

### Test for appropriate width of slanted portion

A test was conducted to figure out a relationship between the width of slanted portion 11 and leakage of dog urine out of absorbent sheet 5 on the following conditions.

The test was performed by using a cover member 1 having a slanted portion 11 with a width W of 135 mm and a maximum height of 20 mm and including a frame member 10 with an opening of 330 mm x 330 mm in inner dimension, together with an absorbent sheet 5 that is 550 mm long horizontally and 550 mm long laterally.

Thirty-seven (37) people keeping dogs indoors participated in the test. The participants were chosen from people who experienced leakage of urine around dog toilets of, for example, an absorbent sheet in regular dog care at a frequency of once every three days.

The above participants installed the cover member on the absorbent sheets for use as pet toilets. Then, the participants took measurements of positions of urine dropped on the slanted portion to see how far the urine was spattered onto the slanted portion from the inner peripheral edge of the frame member after their dogs urinated at the pet toilets. The test was conducted for one week.

Urine leakage widths were aggregated with one participant as one sample, i.e., the pet toilet of each participant as n = 1, based on the measured positional values. The result is shown in Table 1.

**TABLE 1**

| Urine leakage width | Composition ratio | Cumulative value (leakage prevention rate) |
|---|---|---|
| Less than 30 mm | 3.8% | 3.8% |
| Not less than 30 mm and less than 50 mm | 38.5% | 42.3% |
| Not less than 50 mm and less than 60 mm | 15.4% | 57.7% |
| Not less than 60 mm and less than 70 mm | 11.5% | 69.2% |
| Not less than 70 mm and less than 80 mm | 15.4% | 84.6% |
| Not less than 80 mm and less than 110 mm | 3.8% | 88.4% |
| Not less than 110 mm and less than 200 mm | 3.8% | 92.2% |
| Not less than 200 mm and less than 250 mm | 7.7% | 100% |

The "urine leakage width" in Table 1 indicates a widthwise extent of leakage of urine spattered out of the absorbent sheet when the pets (dogs) urinated at the pet toilets. The "urine leakage width" is measured widthwise from the inner peripheral edge toward the outer side of the frame member of the cover member. More specifically, the "urine leakage width" means to what extent the width of the slanted portion is needed to prevent urine from leaking onto, for example, the floor outside the absorbent sheet.

The "composition ratio" indicates the ratio of leakage that occurred within the dimensions of the "urine leakage width" in the lefthand column relative to the entire area of the pet toilets that the participants used.

The "cumulative value" indicates the cumulative total of urine leakage occurrence. The urine splashed out of the absorbent sheet and dropped on the slanted portion of the cover member. Hence, it can be said that the values listed in the "cumulative value" column denote a leakage prevention rate that urine was prevented from dropping on the area outside the absorbent sheet such as a floor.

As shown in Table 1, the slanted portion of the frame member having a width less than 30 mm resulted in prevention of 10% or less of the overall urine leakage. On the other hand, it turned out that the slanted portion of the frame member having a width greater than 30 mm prevented 40% or more of the overall urine leakage, and the slanted portion having a width of 50 mm or greater prevented 50% or more of the overall urine leakage from the absorbent sheets with respect to more than half of the pets. Especially, it is observed that the slanted portion having a width of 80 mm or greater prevented 90% or more of the overall leakage of urine out of the absorbent sheets. In other words, it can be seen that the slanted portion having a wider width effectively prevents urine leakage.

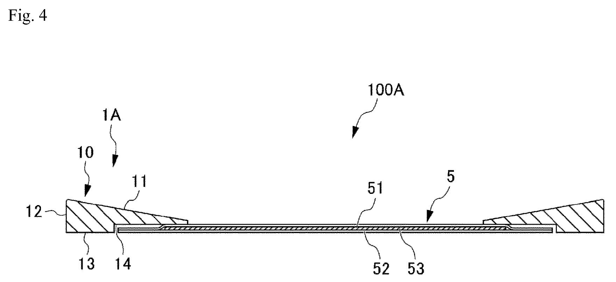

Next, a pet toilet 100A and a cover member 1A according to a second embodiment are described with reference to Fig. 4. Fig. 4 is a cross-sectional view of pet toilet 100A according to the second embodiment. In the description of the second embodiment and onward, parts commonly used with the first embodiment are assigned the same reference numerals and are not described redundantly.

The second embodiment is different from the first embodiment in that frame member 10 is made of a solid, panel-shaped member, and that cover member 1A has a lower surface portion 13 to contact an installation surface for cover member 1A, such as a floor, and a stepped portion 14 depressed upward from lower surface portion 13.

Lower surface portion 13 includes a flat surface provided on an outer peripheral side of the bottom surface of frame member 10.

Stepped portion 14 is provided on an inner peripheral side of the bottom surface of frame member 10. Stepped portion 14 comprises a heightwise depression from lower surface portion 13. Stepped portion 14 is depressed heightwise from lower surface portion 13 by approximately 1 mm to 10 mm and has a flat surface extending widthwise toward the end of the inner peripheral side of frame member 10. An end and a portion proximate thereto of absorbent sheet 5 are contained in the hollow of stepped portion 14.

Pet toilet 100A and cover member 1A according to the second embodiment provide the following effects in addition to those obtained from the first embodiment.
(6) The bottom surface of cover member 1A has a stepped portion 14 depressed heightwise such that the inner peripheral side of the cover member is located at a higher position than the outer peripheral side. Thus, an end and a portion proximate thereto of absorbent sheet 5 are placed in stepped portion 14, and frame member 10 is prevented from being tilted by the thickness of absorbent sheet 5 even though the frame member 10 is made of a solid, panel-shaped member. Further, absorbent sheet 5 is reliably pressed against the surface of stepped portion 14 extending in the direction of the width of frame member 10, and deviation of absorbent sheet 5 in relation to cover member 1A is prevented even more reliably.

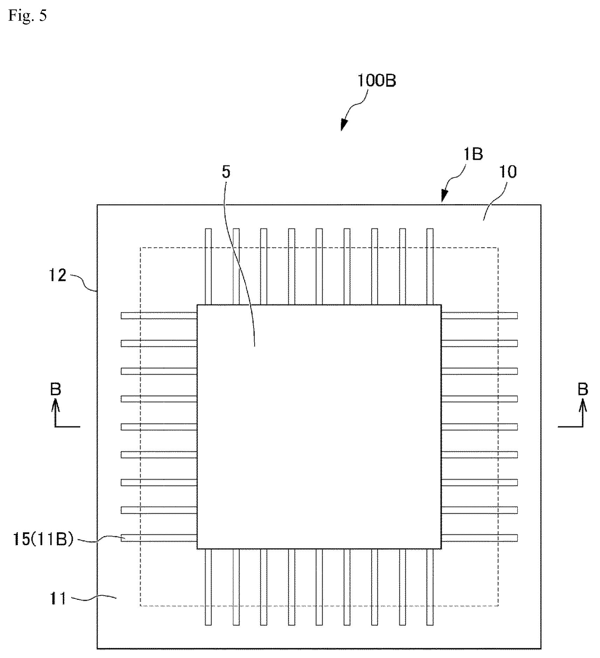

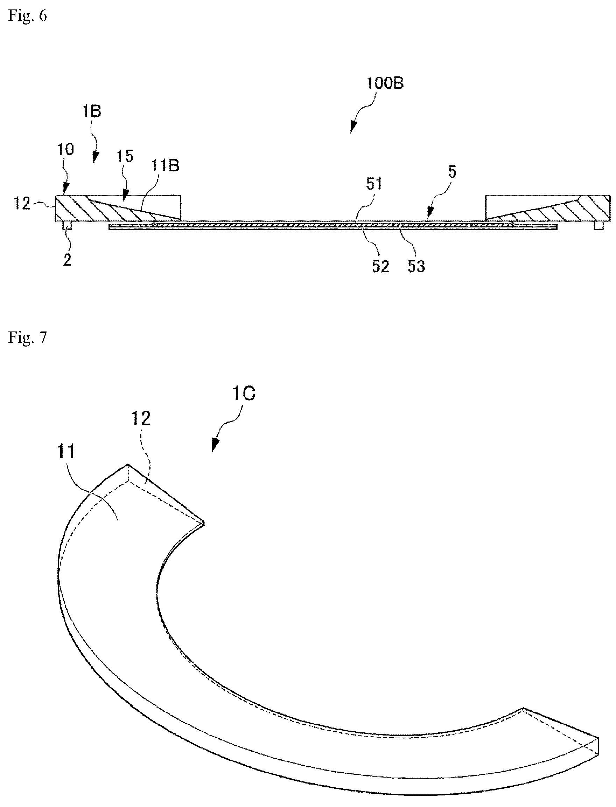

Next, a pet toilet 100B and a cover member 1B according to a third embodiment are described with reference to Figs. 5 and 6. Fig. 5 is a top view of pet toilet 100B according to the third embodiment. Fig. 6 is a cross-sectional view of pet toilet 100B according to the third embodiment. The third embodiment is different from the first and second embodiments in that cover member 1B has grooves 15.

Frame member 10 is made of a flat, panel-shaped member with a constant thickness from the outer peripheral edge to the inner peripheral edge.

Grooves 15 extend widthwise from the end of the inner peripheral edge toward the outer peripheral edge on the upper surface of frame member 10. Grooves 15 do not reach the end of the outer peripheral edge and extend from positions inward of the outer peripheral edge in slanted portion 11 to the end of the inner peripheral edge. Grooves 15 are spaced from each other in longitudinal directions with respect to the four sides of frame member 10. Grooves 15 have slanted portions 11B at their bottoms. Specifically, the bottom surfaces of grooves 15 are inclined to get deeper from the outer peripheral side toward the inner peripheral side. Of urine dropped on the upper surface of frame member 10, an amount of the urine that lands in grooves 15 runs along slanted portions 11B at the bottoms of grooves 15 and falls onto the surface of absorbent sheet 5 from the inner ends of grooves 15. Since grooves 15 do not reach the end of the outer peripheral edge of frame member 10, urine is kept from moving out of frame member 10 through slanted portions 11B of grooves 15.

Pet toilet 100B and cover member 1B according to the third embodiment provide the following effects in addition to those obtained from the foregoing embodiments.
(7) A plurality of grooves 15 extending widthwise are provided on the upper surface of cover member 1B, and slanted portions 11B are provided at the bottoms of grooves 15. Thus, while an uncomfortable feeling for dogs of stepping on frame member 10 is reduced with the level upper surface of frame member 10, urine dropped in grooves 15 is guided to the absorbent sheet because of the inclination of the bottom surfaces of grooves 15.

Next, a cover member 1C according to a fourth embodiment is described with reference to Fig. 7. Fig. 7 is a perspective view of cover member 1C according to the fourth embodiment. In Fig. 7, height adjuster 2 is not shown.

The fourth embodiment is different from the foregoing embodiments in that cover member 1C is arcuate in plan view. Cover member 1C according to the seventh embodiment is installable in such a way that the ends of the arc touch a wall surface. In this case also, the upper surface of cover member 1C is inclined such that the inner peripheral side of the arc is lower than the outer peripheral side.

Cover member 1C according to the fourth embodiment provides the following effects in addition to those obtained from the foregoing embodiments.
(8) By placing in contact with, for example, a wall surface, cover member 1C is installed in a room without taking extra space.

Description has been given of preferred embodiments of the present invention. The present invention is however not limited to the above-described embodiments and encompasses suitable changes and modifications.

For example, the frame member of the cover member may be made of a flexible material that is foldable or reliable, which allows the cover member to be folded into a smaller piece or rolled for storage when the cover member is not in use, or to make the size smaller when moving the pet toilet, thus improving convenience.

Further, according to the first and second embodiments, a rectangular frame member is mainly used for the cover member, but the frame member is not limited to rectangular shapes. The frame member may take any shapes such as circular, oval, or an animal shape.

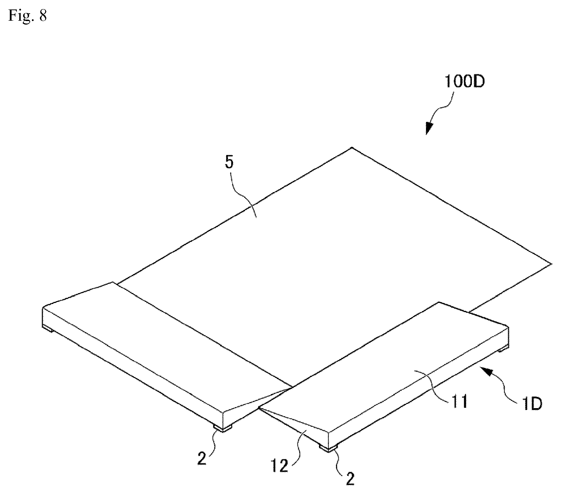

Further, the cover member does not have a frame member in some embodiments. As shown in Fig. 8, a cover member 1D has a rectangular shape in plan view and may be placed only at a portion of the outer peripheral edge of absorbent sheet 5. In such a case that urine leaks and gets the floor wet from nearly the same positions of absorbent sheet 5 every time a pet urinates, cover member 1D is placed at a position prone to urine leakage, so as to prevent urine from leaking onto the floor.

Further, according to the first to fourth embodiments above, the pet toilet has the absorbent sheet directly placed on an installation surface such as a floor, and the cover member is placed over the absorbent sheet, but the structure is not limited thereto. The cover member may have a bottom surface portion to be placed under the lower surface of the absorbent sheet, a frame-shaped upper surface portion, and an outer peripheral sidewall portion, so as to construct a pet system toilet including the cover member and the absorbent sheet contained between the upper surface portion and the bottom surface portion of the cover member.

Further, according to the first to fourth embodiments above, an absorbent sheet including a liquid-permeable sheet, an absorbent core, and a liquid-impermeable sheet is used as the sheet-shaped absorbent member, but the structure is not limited thereto. Exemplary materials for the sheet-shaped absorbent member include a sheet of an organic fiber material such as wooden panel and a urethane sheet.

### BRIEF EXPLANATION OF REFERENCE SIGNS

- 1: COVER MEMBER
- 5: ABSORBENT SHEET (ABSORBENT MEMBER)
- 10: FRAME MEMBER
- 11: SLANTED PORTION
- 14: STEPPED PORTION (STEP)
- 15: GROOVE
- 54: MARKING
- 100: PET TOILET

## Claims

1. A cover member for an absorbent member, placeable at an outer peripheral side of the absorbent member to partly cover the absorbent member, the absorbent member being a pet discharge absorbable sheet-shaped member, the cover member comprising:
a predetermined width in a direction crossing a direction along an outer peripheral edge of the absorbent member; and
an upper surface with a slanted portion having a downward inclination extending widthwise from an outer side toward an inner side.

2. The cover member according to claim 1, wherein
the cover member has the width in a range from 30 mm to 250 mm and a maximum height of 100 mm or less, the width being greater than the height.

3. The cover member according to claim 1 or 2, comprising a frame member configured to fixedly hold the outer peripheral edge of the absorbent member.

4. The cover member according to any one of claims 1 to 3, wherein the cover member has a bottom surface having a stepped portion comprising a heightwise depression with the inner peripheral side at a higher position than the outer peripheral side.

5. The cover member according to any one of claims 1 to 4, wherein
the upper surface of the cover member has a plurality of grooves extending widthwise, and
the slanted portion is provided at the bottom of each of the grooves.

6. The cover member according to any one of claims 1 to 5, wherein the cover member is a foldable or rollable flexible member.

7. A pet toilet, comprising:
the cover member; and
the absorbent member according to any one of claim 1 to 6, wherein the absorbent member has a marking indicative of a position for locating the cover member.
